(19) Europäisches Patentamt / European Patent Office / Office européen des brevets

(11) **EP 3 026 849 A1**

(12) **EUROPEAN PATENT APPLICATION**

(43) Date of publication:
**01.06.2016 Bulletin 2016/22**

(51) Int Cl.:
**H04L 12/715** (2013.01)   **H04L 12/721** (2013.01)

(21) Application number: **14306893.0**

(22) Date of filing: **26.11.2014**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **ALCATEL LUCENT 92100 Boulogne-Billancourt (FR)**

(72) Inventors:
• **Verchere, Dominique 91620 Nozay (FR)**
• **Randriamasy, Claire, Sabine 91620 Nozay (FR)**

(74) Representative: **Berthier, Karine et al Alcatel-Lucent International 148/152, route de la Reine 92100 Boulogne-Billancourt (FR)**

(54) **Method for composing network views of software defined network controllers, and a software defined network controller**

(57)   It comprises the steps of:
- abstracting the infrastructure of the first network (N1),
- abstracting the infrastructure of the second network (N2),
- requesting (QU), from a client (CL), hosted at a cloud service provider (CSP), to a first server (S1) and to a second server (S2), infrastructure maps and cost maps of their respective networks,
- computing in the infrastructure map and its cost map of the first server (S1) all the routes that can be selected in the first network, and computing in the infrastructure map and its cost map of the second server (S2) all the routes that can be selected in the second network,

- then computing all the possible interconnection links (IL) between at least one route computed in the first network (N1) and all the routes computed in the second network (N2) during the previous step,
- then, if there is at least one possible interconnection link (IL) between a first route computed in the first network and a second route computed in the second network, for each possible interconnection, computing the total cost of a path comprising said interconnection, said first route and said second route,
- then, if there are several possible paths, selecting the less costly path.

FIG 3

**Description**

BACKGROUND OF THE INVENTION

Field of the invention

The present invention relates to the telecommunication controlled networks called software defined network (SDN), more peculiarly it relates to a method for composing network views of SDN controllers, and a SDN controller for implementing this method. A view is an abstracted representation of the state of a network domain and is characterized by the resources required at the nodes and the links used to execute the services offered, with a guaranteed quality, to a tenant.

A SDN comprises a centralized controller, if it is a small sized network; or comprises several controllers respectively controlling connected network domains.

During its execution, each SDN application uses a view of the underlying network infrastructure. This view is exposed by one of the centralized controllers of the SDN, to this application. A network view has the right level of abstraction of the network infrastructure details to enable:

- a network control based SDN application to effectively configure the network equipments (Resource facing SDN applications);
- a network service based SDN application to effectively operate the network services (Customer facing SDN applications).

Network service based SDN applications belong to a class of SDN applications that require available resources to be allocated and controlled by network control applications.

The view of a network controller has a topology defined by nodes and links, abstracted from the underlying network equipments. A SDN application may modify a view by changing the configuration of the forwarding tables of nodes, through a given command protocol interface.

Each view is built, by a SDN controller, from requirements and rules to configure the equipments involved in the network domain controlled by this SDN controller. The requirements encompass: Location of this network domain, its switching capability, its intrinsic provisioning procedures, its specific fault management and monitoring rules.

The view built by an SDN controller must be updated each time a new configuration of the equipment is implemented. Today, these updates of network views are manually programmed; they are not automated and consequently cannot be processed in real time.

Description of the prior art

A SDN controller has to maintain a network view consistent with the current state of the global network infrastructure. For large scale networks, where the number of equipments is important, the number of views to be administrated and maintained by one centralized SDN controller becomes very large. For these large network infrastructures, the capability of each centralized SDN controller becomes a bottleneck. The consequence is that a classical SDN controller provides one static view of the network infrastructure. The consequence for network service providers (NSPs) is that each service function uses one static view of the network infrastructure. Today the service functions are statically deployed because their services are tightly coupled to the network topology. Thus each service function uses one static view of the network infrastructure.

The static nature of their current service deployments limits the ability of NSPs to introduce new services and/or remove existing service functions, as well as to offer a new service that is a combination of several deployed service functions. It is a problem because there is a cascading effect: When the status of one service function changes, it affects the status of each composed service relying on this service function. And the operator has to manually maintain the consistency between the status of the service function that changed and the status of each composed service.

SDN controllers have been initially developed and deployed to manage confined local area networks for enterprises or data centers. The number of equipments in a local area network controlled by one SDN controller is not large (about 50 equipments at maximum). The number of views is often limited to one simple global network view. Consequently, manually updating one view attached to an SDN controller is not a problem.

A classical SDN controller relies on one single network-wide coarse-grain policy, and it configures the packet forwarding tables of the switching equipments directly from the network view. A classical SDN controller simply configures the switching fabric via tables of OpenFlow based Ethernet switches by managing the admittance and the routing of Ethernet flows. A classical SDN controller manages a very small number of operational network states. For example, in the Stanford computer science department, one SDN controller supports about a couple of hundreds of physical switches.

In small and mid-size enterprises, one SDN controller supports a few tens of Ethernet switches.

These networks operated by a centralized SDN controller are not shared between different business users contracting connectivity services. These networks are usually not supporting a large number of services with stringent quality. Because the control procedures are simple and the number of switch configuration changes is limited during normal operation, there is no scalability problem for a SDN controller to control these static local area networks.

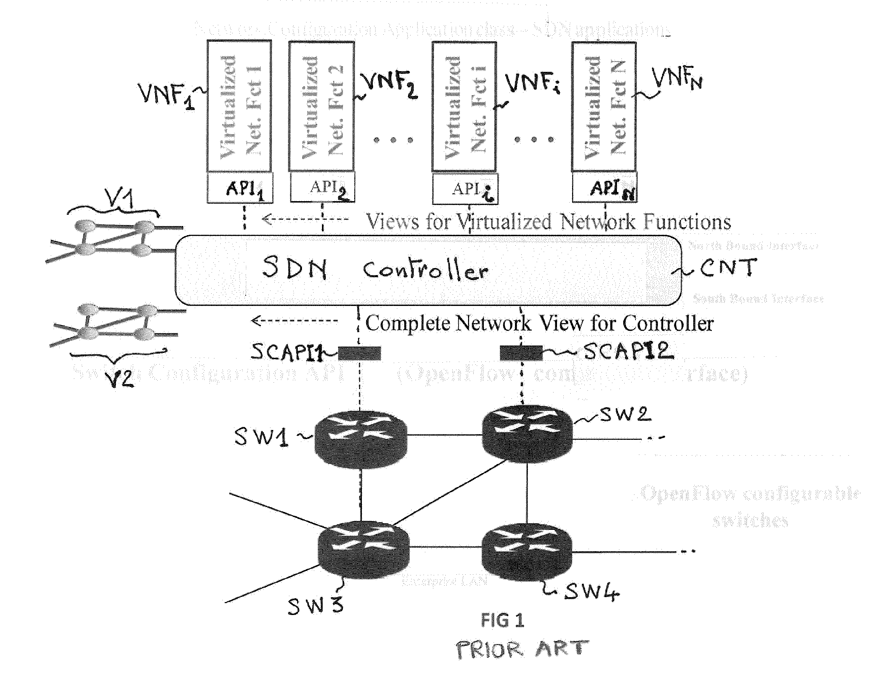

**Figure 1** schematically shows network views built at an exemplary classical SDN controller CNT controlling a small sized SDN. In this example, SDN applications (control functions or service functions) comprise virtual network functions (VNF) such as $VNF_1$, ..., $VNF_i$, ..., $VNF_N$ respectively linked to the SDN controller CNT by application programming interfaces $API_1$, ...., $API_i$, ..., $API_N$. For instance, these VNF are virtualized control functions to control a transport network infrastructure. All these virtual network functions $VNF_1$, ..., $VNF_i$, ..., $VNF_N$ use a same view V1, i. e. each VNF is executed on the unique view V1.

This exemplary SDN comprises switches SW1, SW2, SW3, SW4 that constitute a small enterprise telecommunication network, for instance. The switches SW1 and SW2 are respectively linked to the SDN controller CNT by switch configuration application programming interfaces SCAPI1 and SCAPI2 that are compliant with a network configuration protocol such as the OpenFlow protocol. Also, the switch configuration application programming interfaces can be compliant with other network configuration protocols such as Simple Network Management Protocol (SNMP), Network Configuration Protocol (NETCONF), or proprietary Command Line Interface (CLI). The switch SW1 is linked to the switches SW2 and SW3. The switch SW2 is linked to the switches SW1, SW3, and SW4. The switch SW3 is linked to the switches SW1, SW2 and SW4. The switch SW4 is linked to the switches SW2 and SW3. The SDN controller CNT configures the switches SW1, SW2, SW3, SW4 through a view V2 that is a complete network view that it uses for accessing the switches of the whole infrastructure of this enterprise telecommunication network.

Today, there is no satisfactory method enabling a SDN controller to control a dynamic large scale telecom network because it is complex to maintain consistency of one single view covering a large size infrastructure. A network view may be exposed to different SDN application instances executed by one given SDN controller. However, classical SDN controllers are neither scalable:

- to control large single domain networks (e.g. telecom networks or national research and educational networks) because the number of SDN application instances is usually very high;
- nor to control multi-domain networks (e. g. telecom networks that are shared between different business users) in which several individual SDN controllers may need to communicate their network views and may need to compose them to implement multi-domain network services.

Consequently, when considering large scale networks (that can also be multi-domain), the current method is to build one unique view of this large scale network and associate it to each SDN application; this single view being static. As SDN applications are numerous, the modification of the network view is not implemented because it would be a complex process, prone to errors such as global network state inconsistency. Therefore, these networks are statically configured for very long term services.

Thus, there is a need to provide a method that enables to modify the view of a network, for a SDN controller controlling a large scale and (possibly) multi-domain transport network. This problem can be solved by applying the method according to the invention.

SUMMARY OF THE INVENTION

A first object of the invention is a method for composing the views of a first software defined network controlled by a first controller and the views of a second software defined network controlled by a second controller, comprising the steps of:

- composing the views of a first software defined network controlled by a first controller and the views of a second software defined network controlled by a second controller, comprising the steps of:
- abstracting the infrastructure of the first network, in a first server associated to the first controller, by generating a first view comprising a first infrastructure map and a first cost map,
- abstracting the infrastructure of the second network, in a second server associated to the second controller, by generating a second view comprising a second infrastructure map and a second cost map,
- requesting, from a client, hosted at a cloud service provider, to the first server and to the second server, infrastructure maps and cost maps of their respective networks,
- computing in the infrastructure map and its cost map of the first server all the routes in the first network, and computing in the infrastructure map and its cost map of the second server all the routes in the second network,
- then choosing at least one route among the routes computed in the first network,

- then computing all the possible interconnection links between the at least one route chosen in the first network and all the routes computed in the second network,
- then, if there is at least one possible interconnection link between a first route computed in the first network and a second route computed in the second network, for each possible interconnection link, computing the total cost of a path comprising said interconnection link, said first route, and said second route,
- then, if there are several possible paths, selecting the less costly path.

The method according to the invention enables to keep a set of network views consistent and synchronized, even for a SDN controller controlling a large scale and (possibly) multi-domain transport network, because each VNF executed by an SDN controller only has a limited view of the network. When a VNF needs to be executed by its SDN controller, to deploy a virtual data center service, for instance, the method composes a view from a reduced set of network views. This new view can be stored and updated, for composing new views of the network.

In what follows, **ALTO** stands for **Application Layer Traffic Optimization** and is both a framework and a protocol standardized by the Internet Engineering Task Force (**IETF**). An "ALTO Service" provides network information (e.g. basic network locations, structures and preferences, of network paths) with the goal of modifying network resource consumption patterns while maintaining or improving application performance. The basic information supplied by ALTO is based on abstract maps of a network. These maps are defined and set by the operators, they provide a simplified view, yet comprising enough information about a network, for applications to effectively utilize them. Additional structures are built on top of the maps, such as the structure named **"Costs"** supplying other "cost maps" representing the transport costs between groups of network locations of a map.

In the context of the ALTO protocol, an ALTO server allows the network operator to configure the network map and the cost map which can be used as a view of the network infrastructure by the CSP.

For instance, let us consider an SDN controller that uses the network map and the cost map to execute a virtualized network routing function (VNF) to compute the different routes, i.e. virtual networks (VNs), and to classify them according to their costs. It provides a view of the network. Each VNF instance is executed by the SDN controller through a view of the network, i.e. the VNF instance is executed by the SDN controller over a subset of the nodes of the complete network. During the lifetime of a VNF instance, the VNF can change the configuration of the network elements and consequently the state of these network elements is modified. The view of the network is then changed.

As another example, let's consider a VNF that is a traffic load balancer executed by the SDN controller on some nodes of the network. During the execution of this VNF, the traffic load at the switching nodes will be changed to be balanced according the algorithm of the load balancer VNF; meanwhile the traffic load state of the other nodes is not changed because this load balancer VNF is not controlling these other nodes. Consequently defining one network view for the load balancer VNF as the nodes where the load balancer VNF is executed, and defining another network view as the nodes where the load balancer VNF is not executed, it reduces the complexity to maintain the state of each node of the complete network.

A complete view of the network is recomposed by defining the **interconnection links** between these two views, by:

- computing all the possible interconnection links between at least one route computed in the first network and all the routes computed in the second network during the previous step,
- then, if there is at least one possible interconnection link between a first route computed in the first network and a second route computed in the second network, for each possible interconnection, compute the total cost of a path comprising said interconnection, said first route and said second route,
- then, if there are several possible paths, selecting the less costly path.

Thanks to the composition method according to the invention, it is less complex to expose and to maintain a small network view (i.e. a partial view of the complete network) for each VNF instance (also known as SDN application) rather than to expose and to maintain one view of the complete network for all the VNF instances executed by an SDN controller. The complexity is reduced because the decomposition of the view of the complete network in several smaller network views allows identifying which are the nodes controlled by the VNF, i.e. the network view decomposition avoids to search to update the states of the nodes that are not controlled by a VNF.

According to a first embodiment of the method according to the invention, called series concatenation, for choosing at least one route among the routes in the first network, it comprises the step of limiting the choice of the at least one route of the first network by considering only the least costly route among the routes computed in the first network that are connectable to routes of the second network through interconnection links.

According to a second embodiment of the method according to the invention, called global concatenation, for choosing at least one route among the routes in the first network, it comprises the step of:

- taking all the routes of the first network one by one, and for each route of the first network, computing all the routes of the second network that are connectable through interconnection links to the considered route of the first network;
- then limiting the choice of the routes of the first network that are connectable to routes of the second network by selecting only the least costly route among the routes of the first network that are connectable to routes of the second network through interconnection links.

A second object of the invention is a SDN controller for implementing the method according to the invention.

Other features and advantages of the present invention will become more apparent from the following detailed description of embodiments of the present invention, when taken in conjunction with the accompanying drawings.

BRIEF DESCRIPTION OF THE DRAWINGS

In order to illustrate in detail features and advantages of embodiments of the present invention, the following description will be made with reference to the accompanying drawings. If possible, like or similar reference numerals designate the same or similar components throughout the figures thereof and description, in which:

- Figure 1 (described above) schematically shows network views built at an exemplary classical SDN controller controlling a small sized SDN.
- Figure 2 illustrates the general principle of composing two views in series.
- Figure 3 illustrates the method according to the invention and a comparison between two embodiments of the method according to the invention.

DETAILED DESCRIPTION OF THE PREFERRED EMBODIMENTS

The basic idea of present invention is to create a "Network view composition group", specified similarly as a mathematical group operator and enabling the composition of several network views. A network view is an abstraction of the physical network infrastructure configured by a SDN controller. A link between a pair of nodes defines a possible relation, with an associated weight to execute a given SDN application i.e. a VNF. The SDN controller indicates the relation between two nodes due to their proximity in the context of the execution of a VNF i.e. a SDN application. A network view is a representation of the network state, used as an input by the SDN controller to execute a VNF.

This network view composition group is a set of elements, and each element is an atomic network view i.e. an uncombined view. This set is coupled with an operator that allows combining any couple of network views to form a third network view that belongs to the set of network views attached to the SDN controller. The third network view can be used by an instance of a VNF.

The method according to the invention comprises the step of defining a repository of network views, attached to a SDN controller, as a finite set V of elementary network views that will be used as a generating set, for the group. The set V is a subset of network views chosen such that every network view attached to the SDN controller can be expressed as a combination (through the group operator) of network view elements of V. The composition method according to the invention concerns more peculiarly the composition called concatenation (or chaining).

The composition method according to the invention comprises two variants:

- **"serial concatenation".**
- **"global concatenation".**

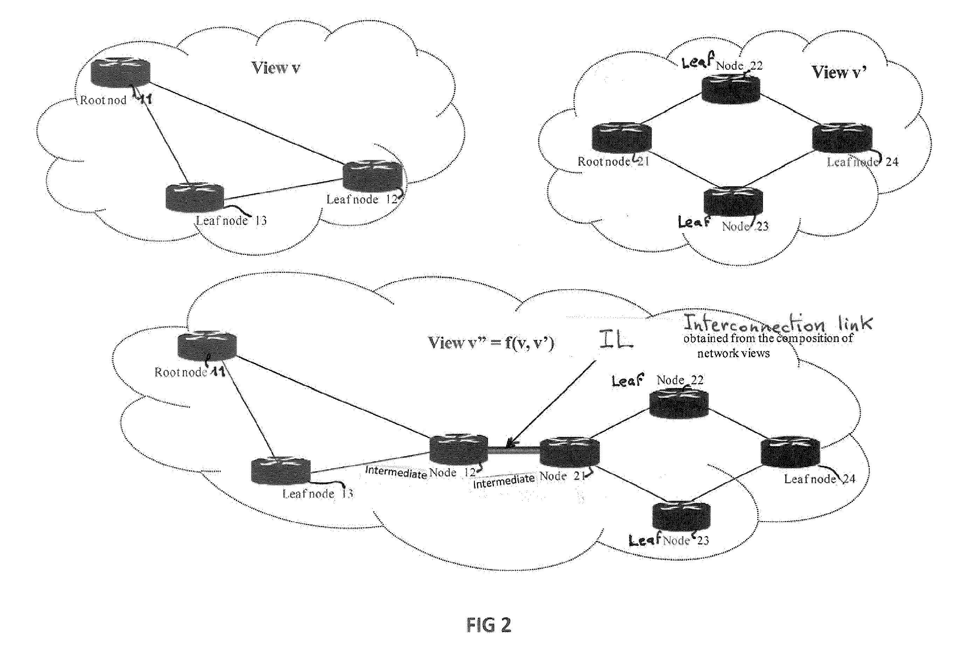

Figure 2 illustrates the general principle of composing two views by a concatenation (Either serial concatenation or global concatenation) in a first example of network. In this first example of network, a composed network view v" is built on a set of two exemplary network views v and v'. The serial composition builds a new network view v" for the execution of an SDN application. The couple of views v and v' can possibly belong to two different network domains, in the case the SDN application is executed over multiple SDN network domains.

The two network views denoted v and v' are respectively associated to two different VNF: F and F' (for example, offering virtual data center (VDC) services).

Some network views may have distinguishable nodes or links, depending on their associated VNFs. For example, in the case where the VNF creates an instance of a network service function such as the service called Ethernet Virtual Private Tree, a given node of its associated network view can be designated either as: a root node, an intermediate node, or a leaf node. In the case where the node is a root node, the ingress service traffic of the VNF can be delivered to one or more of any of the other nodes in the Ethernet Virtual Private Tree, i. e. the ingress service traffic at a root node can be delivered to one or more leaf nodes in the Ethernet Virtual Private Tree.

In the example illustrated by **Figure 2,** the view v comprises:

- A root node 11.
- Two leaf nodes: 12 and 13.

The view v' comprises:

- A root node 21.
- Three leaf nodes: 22, 23, 24.

The serial concatenation of these network views, denoted f(v, v'), is a network view v" created from the union of the network view v and the network view v' by connecting the leaf node 12 of the view v with the root node 21 of the view v' by an **interconnection link IL.** The root node 11 of the view v becomes the root node 11 of the composed view v" and the leaf node 13 of view v becomes a leaf node of the composed view v". The leaf nodes 22, 23, 24 of the view v' become leaf nodes 22, 23, 24 of the composed view v". The leaf node 12 of the view v becomes an intermediate node 12 of the composed view v". The root node 21 of the view v' becomes an intermediate node 21 of the composed view v". The interconnection link IL is computed by one of the two variants of the composition method according to the invention:

- **"serial concatenation".**
- **"global concatenation".**

The network view composition method according to the invention is more complex than just single-level inter application service topology concatenation. It comprises the steps of:

- creating a set of «basic» network views stored in a specific database, called "repository";
- and applying a composition operator on at least two views of this set, this composition operator computing an interconnection link between two views, if there is at least one solution to this problem.

The input network views may come from different infrastructure layers, for instance optical transport network layer topology, data transport network layer topology and data center layer topology. They are formed with respect to their involvements in a set of "basic" SDN controlled functions such as: "Ethernet Virtual Private Tree", or "Data Center Cloud Access", or "Virtual Private Network":

- A particular service may need to compose functions such as virtual private network and datacenter cloud access, and therefore the corresponding network views.
- The basic network views are stored in a network view repository on which a plurality of composition operators is specified, for instance: "horizontal serial concatenation" (mono-layer) and "vertical serial concatenation" (multi-layer),
- The network view repository is typically managed by a SDN controller.
- The composition operators are defined so as to generate a composed network view based on the input network views, in an automatic way, so that only a basic set of network views needs to be stored and updated.
- A composition operator on a core network view repository may have properties such as closure, associativity, identity, symmetry and invertibility (that are the properties of an algebraic group).
- A network view composition operator can be related to a network management system, and to a datacenter resources provisioning system, however it is typically associated with a SDN controller.
- The output of a network view composition function is typically to be used by a SDN controller to execute VNFs.

## Example of use of the concatenation method according to the invention:

For example, a transport network view and a datacenter network view are composed together to execute VNFs to deliver an instance of a VDC service. This service is a composition of one or more virtual network services and one or more virtual machine services.

The VNFs can typically be software applications which are executed to inspect or direct data flows, such as load balancers, firewall, deep packet inspection, flow protection, flow recovery, etc, or to control the resources of the network. A VNF is executed by a network controller (such as an SDN controller) according to the quality of service defined by the agreement for delivering the VDC service to the customer.

A view is implemented within a network control framework. A view can be described with the network map and the cost map as specified in ALTO protocol framework.

ALTO is a candidate to encode a view as it can help to select the relevant application paths; and it abstracts the rest of the topology.

Other network frameworks can also be used to define a view used to support a VDC service (i.e. a cloud service):

- Service Function Chaining (SFC) working group at IETF has recently submitted its problem statement and its framework specification to which this invention applies too.
- Open Shortest Path First-traffic Engineering (OSPF-TE) where the OSPF-speaking nodes participate in a routing area, and build and update a Traffic Engineering Database (TE-DB) that can be filtered to create network views to report on the reservation state of the nodes in that routing area.
- Multiprotocol Border Gateway Protocol (MP-BGP) where the BGP-speaking nodes exchange the routes of a virtual private network (VPN) and maintains VPN routing and forwarding tables (VRFs). Each VRF enables to segregate the traffic and provides a constrained view of the reservation state of the nodes in the routing area defined by the VRF.

The ALTO cost map, resulting from a transport network, is defined and is built by the NSP.

Similarly the ALTO cost map, resulting from a data center network connected to the transport network, is built by the data center service provider (DCSP). The ALTO server of the NSP and the ALTO server of the data center service provider expose their respective abstracted views that can be used to provide the guidance to the cloud service provider (CSP), in order to instantiate VDC services.

The transport network map and the transport network cost map define several views of the transport network infrastructure, which are exposed to the CSP. The datacenter network map and datacenter cost map define several views of the datacenter infrastructure that are exposed to the cloud service supplier. A view of the transport network is used to deploy the virtual network services (Virtual data center) retailed by the CSP and a view of the datacenter is used to deploy the virtual machine services retailed by the CSP. A view of the transport network and a view of the datacenter can be concatenated to allow the CSP to retail virtual networks and virtual machines as VDC services to its customers. The ALTO client hosted at the CSP can request service elements for the CSP to compose a VDC service to its customers.

The concatenation method according to the invention can be implemented with different concatenation operators for composing the transport network services exposed by a network service provider (NSP) ALTO server and a datacenter services exposed by a datacenter service provider (DCSP) ALTO server:

- **A serial concatenation operator.**
- **A global concatenation operator.**

For instance, let us consider the view composition to execute a service, for instance a virtual data center VDC. In the description below, PDI is the ALTO term that stands for "Provider-defined Identifier" of an ALTO network location.

**1) If we use a <u>serial</u> concatenation operator for composing views for a VDC service:**
For each VDC service demand from the CSP, the <u>serial</u> concatenation view composition algorithm determines all the connectivity services that have a connection point with the data center, from the network map and its cost map. Then it selects, among them, a single connectivity service, having a connection point with the data center according to the transport network routing criteria of the VDC services requested by the CSP, such as quality of service (transmission bandwidth, reliability, etc.), security, confidentiality, service prices, or other. The selected connectivity service corresponds to a connectable provider identifier PID1 of the transport map and its cost map. Then the <u>serial</u> concatenation view composition algorithm builds a so called "filtered" data center view, by considering only the provider identifiers, of the data center, that are connectable to the provider identifier PID1 of the transport map and its cost map.

Subsequently the serial concatenation view composition algorithm selects an optimal virtual machine service from the datacenter map and its cost map, according to requested routing criteria such as a quality of service (computing and storage, operating system, reliability, etc), security, confidentiality, service prices, or other. The selected virtual machine service, from the datacenter map and its cost map, corresponds to a connectable provider identifier PID2 of the datacenter map and its cost map.

Then the <u>serial</u> concatenation view composition algorithm generates an inter-domain network segment constituting an intermediate link IL between the single selected connectable provider identifier PID1, of the transport map and its cost map, and a selected connectable provider identifier PID2 of the datacenter map and its cost map.

The resource reservation process is applied to this inter-domain network segment i.e. it may be needed to provision this network segment and then to activate it for the virtual datacenter service.

**2) If we use a <u>global</u> concatenation operator for composing views for a virtual datacenter (VDC) service:**
For each CSP service demand, the <u>global</u> concatenation view composition algorithm determines and selects <u>all</u> the connectivity services that have a connection point with the Data Center, according to the requested routing criteria of the virtual datacenter, such as quality of service (transmission bandwidth, reliability, etc.), security, confidentiality, service prices, or other. Each selected optimal connectivity service corresponds to a connectable provider identifier PID1 of the transport map and its cost map. Then the <u>global</u> concatenation view composition algorithm selects the possible virtual machine (VM) services, for the VDC service demand. Each selected virtual machine service has a connection point with a provider identifier PID1 of the transport network, for each of the provider identifiers PID1 selected at the preceding step, according to requested routing criteria such as a quality of service (computing and storage, operating system, reliability, etc), security, confidentiality, service prices, or other. The selected virtual machine (VM) service, from the datacenter map and its cost map, corresponds to a connectable provider identifier PID of the datacenter map and its cost map.

Then the <u>global</u> concatenation view composition algorithm generates an inter-domain network segment constituting an intermediate link IL between each selected connectable provider identifier PID1 of the transport map and its cost map, and the selected connectable provider identifiers PID2 of the datacenter map and its cost map. The resource reservation process is applied to this segment i.e. it may be needed to provision this network segment and then to activate it for the VDC service.

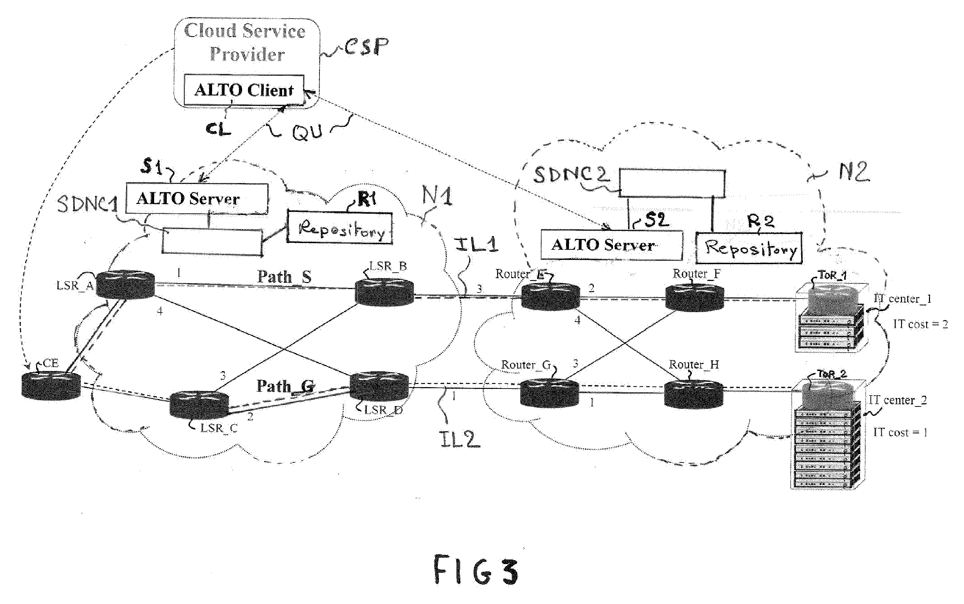

Figure 3 illustrates the method according to the invention and a comparison between two embodiments of the method according to the invention, on a same second example of network, for comparison of the results. It illustrates:

- an embodiment wherein the composition of views for a VDC service is done by the operator of serial concatenation;
- and an embodiment wherein the composition of views for a VDC service is done by the operator of global concatenation.

We consider that these composition operators are both executed successively in two embodiments SDNC1 and SDNC2 of the SDN controller according to the invention.

In these SDN controllers SDNC1 and SDNC2, the two embodiments of the method according to the invention are instantiated in two directions:

1. Retailing by a CSP, of VDC services to enterprise customers: This application is composed with one or multiple virtual networks, and multiple virtual machines connected to one or more of these virtual networks. Enterprise management software applications may be installed in and executed by these virtual machines.

2. Guidance by the network service provider (NSP) and the datacenter service provider (**DCSP**): The CSP uses services from both the NSP and the DCSP. In order to compose a retailed VDC service, the CSP uses guidance about the connectivity service path of a NSP, and about information technology service of a data center service provider, these services being selected from its available transport and application network topology. This guidance may be provided to the CSP by the NSP and by the DCSP via their respective ALTO servers S1 and S2 that respectively expose the abstracted views of the network and of the datacenter infrastructures.

In the example illustrated by **Figure 3,** the first view is the view of a telecom network N1 comprising:

- The SDN controller SDNC1 associated to a repository R1 storing views of the transport network N1.
- An ALTO server S1.
- Four routers LSR_A, LSR_B, LSR_C, LSR_D.

A router CE is external to both networks N1 and N2. This external router CE is not necessarily operated by the NSP of the telecom network N1, and it is not part of the view of N1.
The router CE is linked to the routers LSR_A, LSR_C.
The router LSR_A is linked to the routers CE, LSR_B, LSR_C, LSR_D.
The router LSR_B is linked to the routers CE, LSR_A, LSR_C, LSR_D.
The router LSR_C is linked to the routers CE, LSR_B, LSR_D.
The router LSR_D is linked to the routers LSR_A, LSR_B, LSR_C.

The second view is the view of an intra-datacenter network N2 comprising:

- The SDN controller SDNC2 associated to a repository R2 storing views of the network N2.
- An ALTO server S2.
- Two information technology centers, ITcenter_1 and ITcenter_2, each one comprising a top of rack router, respectively ToR_1, ToR_2.
- Two routers: Router_E, Router_G that are also gateways to communicate with the network N1.
- Two routers: Router _G, Router_H.

The router Router_E is linked to the routers LSE_B, Router_F, Router_H.
The router Router_G is linked to the routers LSR_D, Router_F, Router_H.
The router Router_F is linked to the routers LSR_E, LSR_G, Tor_1.

The router Router_H is linked to the routers ToR_2, LSR_E, LSR_G.

The router ToR_1 is linked to the Router _F and to a stack of IT servers.

The router ToR_2 is linked to the Router _H and to a stack of IT servers.

The two servers S1 and S2 are both classical ALTO servers as specified by IETF RFC 7285.

The two SDN controllers SDNC1 and SDNC2 are classical. However they are different because the SDN server SDNC1 is a network controller for a telecom network, while SDNC2 is network controller for a datacenter network. The essential characteristic of the SDN server SDNC1 is to control carrier grade connectivity services (Telecom network). The essential characteristic of the SDN server SDNC2 is to control the access of virtual machines services (Datacenter network).

Let's consider a cloud service provider (CSP), referenced CSP on Figure 3.

It offers, for instance, carrier grade VDC services to its enterprise customers. This CSP does not completely own the infrastructures (the networks N1 and N2) it uses, and doesn't operate all the equipments of the infrastructures on which the VDC services are configured. It comprises an ALTO client CL for requesting and receiving information from the ALTO servers S1 and S2.

The CSP retails infrastructures (Information technology centers ITcenter_1 and ITcenter_2) as VDC services to enterprises. Enterprises use these VDC services according to service level agreements signed with the CSP owning the virtual data center.

The CSP relies on several "Infrastructures as a Service" **(IaaS)** providers to get and then to retail VDC services to its enterprise clients. An IaaS provider can be:

(i) A telecom NSP wholesaling virtual private network services to the CSP that retails those virtual private network services as virtual network services.

(ii) A DCSP wholesaling access to large scale information technology centers, to the CSP. This latter then retails computing and storage services e.g. as virtual machine services.

(iii) Or any type of application service providers e.g. offering complete enterprise services such as enterprise resource planning services to the CSP that retails it. For instance: Financial management services, human resources management services, supply chain management services, customer relationship management services, project management services, manufacturing management services, etc.

Each IaaS provider uses a SDN controller (It is represented on this Figure 3 as SDNC1 and SDNC2), to configure the equipments involved in executing the virtualized service functions that deliver service elements to the virtual data center. These service elements are combined in the virtual data center services.

The ALTO client CL of the CSP periodically sends ALTO queries QU to the ALTO servers S1 and S2. The ALTO server S1 gives a view of the telecom network infrastructure N1 to the CSP. The ALTO server S2 gives a view of the infrastructure of the intra-datacenter network N2 to the CSP. Then the client CL of the CSP combines these network views, by applying the method according to the invention.

The ALTO server S1 classically provides a view according to a network map and a cost map. The ALTO server S2 is adapted and extended to also give a view of an intra-datacenter network as an information technology center access map and a cost map. So the CSP can offer virtual machine access to its customers.

An information technology center access map defines a grouping of virtual machine endpoints according to their computing, storage or software application capabilities. By grouping virtual machine endpoints together as a single ALTO provider-defined network location, the ALTO server S2 creates an aggregation of several virtual machine endpoints. This aggregation of virtual machine endpoints leads to a better flexibility to scale up or scale down the computing and storage capacity of virtual machine services, without losing critical information when associated to other datacenter and/or transport network information: If the total number of virtual machine endpoints in the datacenter increases several orders of magnitude, it becomes impractical to assign an IP address to each virtual machine end points because of the limited number of IP addresses. To address this problem, the aggregation of virtual machine endpoints is used jointly with the concept of unnumbered virtual machine endpoints:

- The purpose of aggregating virtual machine endpoints is to improve the scalability by reducing the amount of information that has to be handled by the respective ALTO server (S2). This reduction is accomplished by performing VM endpoint information aggregation/abstraction.
VM information aggregation/abstraction may result in losing some of the information to access the right VMs for building a VDC service.
- To limit the amount of information losses, DCSP may need to restrict the type of VM information that can be aggregated/abstracted into the IT center access map and its cost map. The purpose of unnumbered VMs i.e. VMs that do not have IP addresses, can be used when the IP address space is restricted or may become exhausted.

VM end point aggregation and unnumbered VMs can be both implemented and used independently through the IT center access map and its cost map exposed by ALTO server S2.

The ALTO server S2 is also adapted to provide a filtered view of the datacenter map and its respective cost map, these two maps relating to: the respective locations of selected data centers, the IT servers, and their accessibility to enterprise users. In this example, the ALTO server S2 enables the DCSP to control the level of topology and performance details, to export and to share with the CSP.

A filtered view applied over the transport network infrastructure is a policy enforced through the ALTO server S1. It allows the telecom NSP to encourage the CSP to use network paths that would not be usually selected by a network routing function directly applied over the network infrastructure.

Similarly, a filtered view applied over the datacenter infrastructure is a policy of the ALTO services, allowing the DCSP to encourage the CSP to use IT servers that would not be usually selected by an IT service selection function.

In the example of Figure 3, the telecom network N1 belonging to a telecom NSP, hosts the ALTO server S1 interacting with the ALTO client CL that is located at the CSP.

Similarly the intra-datacenter network N2, belonging to a datacenter service provider, hosts the ALTO server S2 to expose its virtual machine resources to the ALTO client CL.

Both ALTO servers S1 and S2 provide abstracted information resources to the ALTO client CL without disclosing the internal information such as IP addressing. Both ALTO servers S1, S2 allow a CSP to compose its cloud services with the optimal selection of the virtual networks allocated on the transport network equipments, and with optimal selection of the virtual machines allocated on information technology server resources. An enterprise client of the CSP is the consumer of these cloud services that the CSP provides.

The transport network map returned by the telecom network ALTO server S1 can include the virtual network endpoints that the telecom NSP exposes to the CSP. It is assumed that each router has an IP address defined by the NSP, to allow the CSP to establish virtual network services.

According to the view exposed by the ALTO server S1, the SDN Controller SDNC1 of the NSP executes a virtualized network service function for the CSP in order to deliver virtual network services on-demand.

Below are two illustrative examples of ALTO transactions to get ALTO map services. Note that the ALTO protocol specification "ALTO protocol » R. Alimi et al. IETF RFC 7285, September 2014", is a standardized protocol and the format below may slightly change. In the examples below, PDI is the ALTO term that stands for "Provider-Defined Identifier" of an ALTO network location.

In these two examples of ALTO transactions, it is assumed that a CSP retails VDC services composed with one or multiple virtual networks (VN), and virtual machines (VM) connected to one or more of these virtual networks. Enterprise management software applications may be installed in and executed by these virtual machines.

To enable the CSP to compose VDC services and have guidance on which network services and datacenter services to select (from its infrastructure as service providers), ALTO servers S1 and S2 are used to expose the abstracted information of the network and datacenter infrastructures to the CSP.

Let's consider a CSP relying on a telecom NSP and a DCSP to provision its cloud services. The NSP exposes a network map, through its ALTO server S1, to the CSP hosting the ALTO Client CL. When requested by the ALTO Client CL, the telecom network map is encoded in an ALTO message, as for example: HTTP/1.1 200 OK

```
Content-Length: TBA
Content-Type: application/alto-networkmap+json
{
 "meta" : {},
 "data" : {
  "map-vtag" : {
   "resource-id": "telecom-network-map",
   "tag": "1266506139"
  },
  "network-map" : {
   "PID_A" : { "ipv4" : ["10.0.0.1/24", ] },
   "PID_B" : { "ipv4" : ["10.0.0.2/24", ] },
   "PID_C" : { "ipv4" : ["10.0.0.3/24" ] },
   "PID_D" : { "ipv4" : ["10.0.0.4/24" ] }
  }
 }
}
```

The ALTO client CL may also request for the telecom network cost map. The ALTO server S1 provides a telecom network cost map that enables to determine preferences amongst network locations (PIDs). One of these network locations is selected by the CSP in terms of routing cost, for example the total capacity along a path between a pair of PIDs and the available bandwidth.

When requested by the ALTO Client CL, the respective telecom network cost map is encoded in a message (below) sent by the ALTO Server S1. In this example, the values between pairs of network locations (PIDs) indicate routing costs that are set by the NSP.

The rule to set the values of the routing costs is under the responsibility of the NSP: A rule usually gives precedence of one network route with respect to the other possible routes, while ensuring a given service level agreement between the NSP and the CSP. The ALTO Server S1 computes and exposes the telecom network map according the rule defined by the NSP.

The ALTO Server S1 supplies a telecom network cost map that is a view (later referenced as *View_1*) of the telecom network, encoded in an ALTO message, as for example:

```
HTTP/1.1 200 OK
Content-Length: TBA
Content-Type: application/alto-costmap+json
{
 "meta" : {},
 "data" : {
  "cost-type" : {"cost-mode" : "numerical",
         "cost-metric": "routingcost"},
  "map-vtag" : {
   "resource-id": "telecom-network-map",
   "tag": "1266506139"
  },
  "cost-map" : {
   "PID_A": { "PID_B": 1, "PID_D": 4 },
   "PID_B": { "PID_A": 1, "PID_C": 3 },
   "PID_C": { "PID_B": 3, "PID_D": 2 },
   "PID_D": { "PID_A": 4, "PID_C": 2 }
  }
 }
}
```

Similarly, the DCSP exposes its datacenter map through its ALTO server S2. This datacenter map is encoded in an ALTO message, as for example:

```
HTTP/1.1 200 OK
Content-Length: TBA
Content-Type: application/alto-datacentermap+json
{
 "meta" : {},
 "data" : {
  "map-vtag" : {
   "resource-id": "datacenter-network-map",
   "tag": "1266506139"
  },
  "network-map" : {
   "PID_E" : { "ipv4" : ["30.0.1.0/24" ] },
   "PID_F" : { "ipv4" : ["30.0.2.0/24" ] }
   "PID_G" : { "ipv4" : ["30.0.3.0/24" ] },
   "PID_H" : { "ipv4" : ["30.0.4.0/24" ] }
  }
  "itcenter-map" : {
   "VM_F1" : { "ipv4" : ["30.0.2.1/24" ] },
   "VM_F2" : { "ipv4" : ["30.0.2.2/24" ] },
   "VM_H1" { "ipv4" : ["30.0.4.1/24" ] },
   "VM_H2" : { "ipv4" : ["30.0.4.2/24" ] },
   "VM_H3" : { "ipv4" : ["30.0.4.3/24" ] },
   "VM_H4" : { "ipv4" : ["30.0.4.4/24" ] },
  }
 }
}
```

A multi-cost map is a protocol extension currently proposed by Alcatel-Lucent in the document « Multi-Cost ALTO » S. Randriamasy et al., draft-randriamasy-alto-multi-cost-08, July 4th 2014..

In the examples illustrated by Figure 3, the datacenter multi-cost map provides preferences amongst the IT centers, ITcenter_1 and ITcenter_2 (virtual machines), in terms of: available processing services, available space storage services, and available VM services.

The basic ALTO protocol is applicable as well, though it requires several ALTO transactions, one for each metric.

The following datacenter cost map is a view (later referenced as *View_2*) of the datacenter, returned by the ALTO Server S2 when requested by the ALTO Client CL of the CSP. The corresponding datacenter cost map is encoded in a message delivered by the ALTO Server 2, as for example:

```
HTTP/1.1 200 OK
Content-Length: TBA
Content-Type: application/alto-costmap+json
{
 "meta" : {
  "dependent-vtags" : [
   {"resource-id": "datacenter-network-map",
   "tag": "1266506139"
   }
  ],
  "cost-types" : [
   {"cost-mode" : "numerical", "cost-metric" : "routingcost"},
   {"cost-mode" : "numerical", "cost-metric" : "computingcost"}
    ]
 },
 "multi-cost-map" : {
  "PID_E": { "VM_FA": [2,2], "VM_FB": [2,2],
       "VM_HA": [4,1], "VM_HB": [4,1], "VM_HC": [4,1],
       "VM_HD": [4,1]},
  "PID_G": { "VM_FA": [3,2], "VM_FB": [3,2],
       "VM_HA": [1,1], "VM_HB": [1,1], "VM_HC": [1,1],
       "VM_HD": [1,1]}
 }
 }
 }
```

Then the service composition algorithm, executed in the ALTO client CL, computes a VDC service configuration by executing one of the following view composition algorithms:

**I) SERIAL VIEW CONCATENATION ALGORITHM:**

**1. Initialization**

An infrastructure as a Service Level Agreement (IaaSLA) is defined between the CSP and the NSP; and between CSP and the DCSP.

**2. Construction of the telecom network view: *View_1***

Each ALTO service request QU is built according to the IaaSLA between CSP and NSP. A request contains parameters (e.g. based on bandwidth and connectivity availability requirements) processed by telecom network's ALTO server S1.

This ALTO service request is sent to ALTO Server S1.

A set of pairs of network locations PID, PID' is returned from ALTO Server S1 and is the telecom network cost map.

Then the pairs of PIDs are classified from the lowest path routing cost to the highest path routing cost. This provides a telecom network view *View_1.*

**3. While the telecom network view *View_1* is not empty:**

Select the first pair of PIDs, $VN_1$, among the classified pairs of PIDs:

$$VN_1 = (PID_1, PID_1')$$

Then remove $VN_1$ from *View_1.*

### 4. Construction of the <u>filtered</u> datacenter view

Each ALTO Service request is built according to the IaaSLA between the CSP and the DCSP. The request contains parameters (e.g. based on processor performance and IT server availability) processed by datacenter's ALTO Server S2.
An ALTO filtered multi-cost map service request is sent to the ALTO Server S2. It is a request that contains the provider identifier $PID_1'$ of $VN_1$ for indicating that the requested cost map must be filtered with $PID_1'$ of $VN_1$, so that it takes into account only the connections from the provider identifier $PID_1'$.
A set of pairs of PIDs ($PID_2$, $PID_2'$), is returned by the ALTO Server S2.
Then the pairs of PIDs are classified from the lowest routing + computing cost to the higher routing + computing cost: It gives a filtered datacenter view: *View_2.*
For each pair of PIDs, $VN_2 = (PID_2, PID_2')$, a network location $PID_2$ of View_2 is connectable to one or several network locations $PID_1'$ of *View_1.*

### 5. Construction of the <u>serial</u> telecom network and datacenter view:

While *View_2* is not empty,
select the first entry: $VN_2 = (PID_2; PID_2')$ such that the network location $PID_1'$ is connectable to the network location PID2.
Remove *VN_2* from the view View_2.
Create the element $VN_3 = (PID_1, PID_1'- PID_2, PID_2')$, i. e. put in series the two segments $PID_1$, $PID_1'$ and $PID_2$, $PID_2'$.
Compute Cost(VN3) = Cost($PID_1$,$PID_1'$) + Cost($PID_1'$,$PID_2$,) + Cost($PID_2$,$PID_2'$)

### 6. Go to step3 :

When the telecom network view *View_1* is empty, the pair $VN_1$ of PIDs of View_1 is selected.

### 7. A serial telecom network and datacenter map (STDM) is created:

If the map STDM is not empty then,
classify $VN_3$ elements from the lowest cost to the highest cost. It gives a view: **View_3.**

### 8. While *View_3* is not empty

Select the first entry of View_3, this entry being composed with

$$VN_1 = (PID_1, PID_1') \text{ and } VN_2 = (PID_2, PID_2').$$

A virtual data center service is then constituted by the service $VN_1$ and the service $VN_2$ in series, noted VDC = $VN_1 \rightarrow VN_2$. Return virtual data center service *VDC.*
The VDC is one service solution combining, in a series, a telecom network service and a datacenter service. It can be a sub-optimal solution.

### II) GLOBAL VIEW CONCATENATION ALGORITHM:

The global view concatenation algorithm is another solution to combine a telecom network service and a datacenter service. It computes the best solution if it exists.

### 1. Initialization

An Infrastructure as a service level agreement (IaaSLA) is defined between the CSP and the NSP; and between CSP and the DCSP.

## 2. Construction of the telecom network view and the datacenter view

Each ALTO service request QU is built according to the IaaSLA between CSP and NSP: the request QU contains, on one hand, the parameters (e.g. based on bandwidth and connectivity availability) processed by telecom network's ALTO Server S1 and, on the other hand, the parameters (e.g. based on processor performance and IT server availability) processed by the data center's ALTO server S2.

The ALTO service request QU is processed by the ALTO Server S1. It produces a telecom network map (TNM).

This ALTO request is also processed by ALTO Server S2. It produces a datacenter map (DCM).

A set of pairs of network locations PID, PID' is returned from the ALTO Server S1 and it constitutes the telecom network cost map (TNC).

A set of pairs of network locations PID, PID' is returned from the ALTO Server S2 and it constitutes the datacenter cost map (DCC).

The cost values of the TNC are set by the NSP according to its internal policies. Similarly the cost values of the DCC are set by the DCSP according to its internal policies.

If the maps TNM and DCM are both not empty then:

Classify telecom network cost map (TNC) from the lowest routing cost pair of PIDs to the highest routing cost pair of PIDs: It gives a telecom network view: *View_1.*

Classify datacenter cost map (DCC) from the lowest routing + computing cost of PIDs to the highest routing + computing cost pair of PID: It gives a data center view: View_2

Else : Return, there is no virtual data center solution *(End of Algorithm).*

## 3. Construction of the global telecom network and datacenter view

For each PID pair of View_1, $VN_1 = (PID_1, PID_1')$, select all the PID pairs of View_2, $VN_2 = (PID_2, PID_2')$ such that $PID_1'$ and $PID_2$ are connectable. Create the elements $VN_3 = (PID_1, PID_1'-PID_2, PID_2')$.

$Cost(VN3) = Cost(PID_1, PID_1') + Cost(PID_1', PID_2,) + Cost(PID_2, PID_2')$

A <u>global</u> telecom network and datacenter map (GTDM) is created.

If GTDM is not empty then:

Classify $VN_3$ elements from the lowest cost to the highest cost: It gives a view View_3.

## 4. While *View_3 is not empty*

Select the first entry of the view View_3. It is composed with

$$VN_1 = (PID_1, PID_1') \text{ and } VN_2 = (PID_2, PID_2').$$

A virtual data center service is then constituted by concatenating the service $VN_1$ and the service $VN_2$, noted VDC = $VN_1 \rightarrow VN_2$.

**Return the virtual data center VDC.**

The table below compares the routing cost of the path Path_G determined by the global view algorithm and the routing cost of the path Path_S determined by the serial view algorithm, for the same example illustrated by Figure 3.

In this example, the <u>global</u> view algorithm computes 8 VDC services and then it compares the respective costs of all the VDC services determined by this algorithm i.e. it compares the respective costs of the routes ABEF, ADG, CBEF, CDGF,ABEH, ADGH, CBEH, CDGH; and it selects the least costly route that is CDGH (cost = 5).

In the same example, the <u>serial</u> view algorithm computes 2 VDC services and then it compares all the VDC services determined by this algorithm, i.e. it compares the respective costs of the routes ABEF and ABEH; and it selects the least costly route that is ABEF (cost = 8).

The possible VDC services computed by the serial view algorithm can be sub-optimal because they are conditioned by the best element $VN_1$ of View_1 that is $VN_1$ = «AB» having a routing cost to 1.

| Telecom Network Segment | | AB | AD | CB | CD |
|---|---|---|---|---|---|
| Routing cost | | 1 | 4 | 3 | 2 |

(continued)

| Telecom Network Segment | | AB | AD | CB | CD |
|---|---|---|---|---|---|
| Inter-infrastructure | | BE | DG | | |
| | | 3 | 1 | | |
| Datacenter | | EF | EH | GF | GH |
| Routing cost | | 2 | 4 | 3 | 1 |
| Computing cost | | 2 | 1 | 2 | 1 |

| Telecom Network costs + Datacenter costs | | **Global** View Composition | | | **Serial** View Composition | |
|---|---|---|---|---|---|---|
| | | ABEF | 8 | **Path_S:** | **ABEF** | 8 |
| | | ADGF | 10 | | ABEH | 9 |
| | | CBEF | 10 | | | |
| | | CDGF | 8 | | | |
| | | ABEH | 9 | | | |
| | | ADGH | 10 | | | |
| | | CBEH | 11 | | | |
| | **Path_G:** | **CDGH** | 5 | | | |

In this table, it appears that the best VDC service computed by global view composition has a cost of 5, whereas the best VDC service computed by serial view composition has a cost of 8, i. e. the global view composition provides a better solution: The VDC service computed by the global concatenation algorithm is the best solution for combining a telecom network service and a datacenter service, because it explores all the possible pairs of PIDs of View_1 and all the possible pairs of PIDs of View_2 that are connectable. On the other hand, the global view concatenation algorithm is more complex than the serial concatenation algorithm to compute a concatenated view in a given network.

The examples described above are described within the frame of the ALTO protocol, but the method according to the invention can be applied in the frame of any other protocol that supplies information based on abstracted maps of a network.

**Claims**

1. **A method** for composing the views of a first software defined network (N1) controlled by a first controller (SDNC1) and the views of a second software defined network (N2) controlled by a second controller (SDNC2), comprising the steps of:

 - abstracting the infrastructure of the first network (N1), in a first server (S1) associated to the first controller (SDNC1), by generating a first view comprising a first infrastructure map and a first cost map,
 - abstracting the infrastructure of the second network (N2), in a second server (S2) associated to the second controller (SDNC2), by generating a second view comprising a second infrastructure map and a second cost map,
 - requesting (QU), from a client (CL), hosted at a cloud service provider (CSP), to the first server (S1) and to the second server (S2), infrastructure maps and cost maps of their respective networks (N1, N2),
 - computing in the infrastructure map and its cost map of the first server (S1) all the routes in the first network, and computing in the infrastructure map and its cost map of the second server (S2) all the routes in the second network,
 - then choosing at least one route among the routes computed in the first network (N1),
 - then computing all the possible interconnection links (IL) between the at least one route chosen in the first network (N1) and all the routes computed in the second network (N2),
 - then, if there is at least one possible interconnection link (IL) between a first route computed in the first network and a second route computed in the second network, for each possible interconnection link, computing the total cost of a path comprising said interconnection link, said first route, and said second route,
- then, if there are several possible paths, selecting the less costly path.

2. A method according to claim 1 wherein, for choosing at least one route among the routes in the first network (N1), it comprises the step of limiting the choice of the at least one route of the first network (N1) by considering only the least costly route (ABEF) among the routes computed in the first network (N1) that are connectable to routes of the second network (N2) through interconnection links (IL1).

3. A method according to claim 1 wherein, for choosing at least one route among the routes in the first network (N1), it comprises the step of:

- taking all the routes of the first network (N1) one by one, and for each route of the first network (N1), computing all the routes of the second network (N2) that are connectable through interconnection links (IL2) to the considered route of the first network;
- then limiting the choice of the routes of the first network (N1) that are connectable to routes of the second network (N2) by selecting only the least costly route (CDGH) among the routes of the first network (N1) that are connectable to routes of the second network (N2) through interconnection links (IL2).

4. **A client (CL) characterized in that** it is configured for:

- requesting (QU), from this client (CL) to the first server (S1) and to the second server (S2), infrastructure maps and cost maps of their respective networks,
- receiving a first view comprising a first infrastructure map and a first cost map, supplied by the SDN control (SDNC1) of a first network (N1),
- receiving a second view comprising a second infrastructure map and a second cost map, supplied by the SDN control (SDNC2) of a second network (N2);
- computing, in the infrastructure map and its cost map of the first server (S1) all the routes in the first network, and computing in the infrastructure map and its cost map of the second server (S2) all the routes in the second network,
- then choosing at least one route among the routes in the first network (N1),
- then computing all the possible interconnection links (IL) between the at least one route chosen in the first network (N1) and all the routes computed in the second network (N2),
- then, if there is at least one possible interconnection link (IL) between a first route computed in the first network and a second route computed in the second network, for each possible interconnection link, computing the total cost of a path comprising said interconnection link, said first route, and said second route,
- then, if there are several possible paths, selecting the less costly path.

5. A client (CL) according to claim 4, **characterized in that**, for choosing at least one route among the routes in the first network (N1), it is configured for limiting the choice of the at least one route of the first network (N1) by considering only the least costly route (ABEF) among the routes computed in the first network (N1) that are connectable to routes of the second network (N2) through interconnection links (IL1).

6. A client (CL) according to claim 4, **characterized in that**, for choosing at least one route among the routes in the first network (N1), it is configured for:

- taking all the routes of the first network (N1) one by one, and for each route of the first network (N1), computing all the routes of the second network (N2) that are connectable through interconnection links (IL2) to the considered route of the first network;
- then limiting the choice of the routes of the first network (N1) that are connectable to routes of the second network (N2) by considering only the least costly route (CDGH) among the routes of the first network (N1) that are connectable to routes of the second network (N2) through interconnection links (IL2).

7. A digital data storage medium storing a set of machine executable program instructions, which, when executed on a computer, cause the computer to perform all the method steps of the method according to one of the method claims1-3.

8. A computer program product comprising computer-executable instructions for performing a method when the program is run on a computer, the method comprising the steps of one of the method claims 1-3.

FIG 1
PRIOR ART

View v

Root nod  11

Leaf node 13

Leaf node 12

View v'

Leaf Node 22

Root node 21

Leaf node 24

Leaf Node 23

View v" = f(v, v')     IL     Interconnection link
obtained from the composition of
network views

Root node 11

Leaf node 13

Intermediate Node 12     Intermediate Node 21

Leaf Node 22

Leaf node 24

Leaf Node 23

FIG 2

EP 3 026 849 A1

19

FIG3

Europäisches
Patentamt

European
Patent Office

Office européen
des brevets

## EUROPEAN SEARCH REPORT

Application Number

EP 14 30 6893

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2013/329601 A1 (YIN HONGTAO [US] ET AL) 12 December 2013 (2013-12-12) * paragraphs [0007], [0029] - [0031]; figure 1 * * paragraphs [0043] - [0049]; figure 3 * ----- | 1-8 | INV. H04L12/715 ADD. H04L12/721 |
| Y | US 2012/195229 A1 (CHEN HUAIMO [US]) 2 August 2012 (2012-08-02) * paragraphs [0057] - [0061]; figure 4 * ----- | 1-8 | |

TECHNICAL FIELDS
SEARCHED      (IPC)

H04L

The present search report has been drawn up for all claims

| Place of search | Date of completion of the search | Examiner |
|---|---|---|
| The Hague | 26 May 2015 | Sager, Bernard |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

....................................................................

& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 14 30 6893

This annex lists the patent family members relating to the patent documents cited in the above-mentioned European search report.
The members are as contained in the European Patent Office EDP file on
The European Patent Office is in no way liable for these particulars which are merely given for the purpose of information.

26-05-2015

| Patent document cited in search report | | Publication date | Patent family member(s) | | Publication date |
|---|---|---|---|---|---|
| US 2013329601 | A1 | 12-12-2013 | NONE | | |
| US 2012195229 | A1 | 02-08-2012 | CN | 103354988 A | 16-10-2013 |
| | | | EP | 2659634 A1 | 06-11-2013 |
| | | | US | 2012195229 A1 | 02-08-2012 |
| | | | WO | 2012103805 A1 | 09-08-2012 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **S. RANDRIAMASY et al.** *Multi-Cost ALTO,* 04 July 2014